# EUROPEAN PATENT APPLICATION

(11) **EP 4 837 838 A1**
(43) Date of publication of application: **11.11.2026**
(21) Application number: 26171875.3
(22) Date of filing: 13.04.2026
(51) Int. Cl.: B64C 27/56, B64C 27/00, B64C 27/57, B64D 43/02, B64C 27/64, B64C 27/68

(54) **METHOD AND SYSTEM OF PREDICTING SERVO TRANSPARENCY FOR ROTORCRAFTS**

(30) Priority: 06.05.2025 US 202519200100
(71) Applicant: Honeywell International Inc., Charlotte, NC 28202 (US)
(72) Inventor: HICKMAN, Alan, Charlotte, 28202 (US); CHEN, Shuai, Charlotte, 28202 (US); ZHU, Xukai, Charlotte, 28202 (US)
(74) Representative: Ingrassia, Fisher & Lorenz UK Ltd.

(57) **Abstract**

A method includes detecting real-time context data of a rotorcraft with a collective actuator during a rotorcraft mission, and obtaining a maximum actuation output of the collective actuator. The method also includes determining a collective actuator performance (CAP) threshold that indicates an upcoming servo transparency is likely to occur in the future if a current state of the collective actuator is maintained. The determining of the CAP threshold includes using multiple factors of the real-time context data that cooperatively indicate both a likelihood of the upcoming servo transparency and an estimated duration from a current time point to a time point of the upcoming servo transparency. The method also includes comparing the CAP threshold to a current actuation force output of the collective actuator, and in response to the comparing, automatically performing an action on the rotorcraft to avoid an upcoming servo transparency event.

## Description

### TECHNICAL FIELD

Implementations of the subject matter described herein relate generally to rotorcraft guidance and display systems and, more particularly, to predicting servo transparency and providing an alert.

### BACKGROUND

Servo transparency or servo reversibility refers to a condition in helicopter flight control systems where external forces acting on the rotor system exceed or counteract the assistance provided by the servos of the helicopter, such as a collective actuator that changes the blade pitch of the main rotor and is activated by a control or collective operated by the pilot. When this occurs, the pilot may experience increased control forces, reduced responsiveness, or unpredictable feedback through the collective flight controls. These effects can manifest as heavy or stiff controls, uncommanded drift, or instability, thereby compromising handling precision and making it more difficult for the pilot to maintain control, which can result in undesired events.

While a pilot may be able to feel the controls starting to respond poorly in mechanical flight control systems, more recent fly-by-wire systems communicate electronically from the flight controls to the actuators, thereby eliminating or reducing flight control movement feel for the pilot such that the pilot has a much more difficult time to detect an onset of servo transparency. Also, known automatic servo transparency detection systems often merely detect existing servo transparencies and cannot predict an impending, future servo transparency. Hence, a need exists for a system and method that predicts an upcoming servo transparency to provide time to alert a pilot and for the pilot to react and avoid the servo transparency.

### BRIEF SUMMARY

This summary is provided to introduce a selection of concepts in a simplified form that are further described below in the detailed description section. This summary is not intended to identify key features or essential features of the claimed subject matter, nor is it intended to be used as an aid in determining the scope of the claimed subject matter.

By one implementation, a method includes detecting, by at least one processor, real-time context data of a rotorcraft with a collective actuator during a rotorcraft mission, and obtaining a maximum actuation output of the collective actuator. The method also includes determining, by at least one processor, a collective actuator performance (CAP) threshold that indicates an upcoming servo transparency is likely to occur in the future if a current state of the collective actuator is maintained. The determining of the CAP threshold includes using multiple factors of the real-time context data that cooperatively indicate both a likelihood of the upcoming servo transparency and an estimated duration from a current time point to a time point of the upcoming servo transparency, and setting the CAP threshold relative to the maximum actuation output of the collective actuator. The method also includes comparing, by at least one processor, the CAP threshold to a current actuation force output of the collective actuator, and in response to the comparing, automatically performing, by at least one processor, an action on the rotorcraft to avoid an upcoming servo transparency event that is likely to occur if the current state of the collective actuator is maintained.

By another implementation, a system includes memory storing a collective actuator performance (CAP) threshold look-up table, and processor circuitry forming at least one processor communicatively coupled to the memory and being arranged to operate by: detecting real-time context data of a rotorcraft with a collective actuator during a rotorcraft mission, obtaining a maximum actuation output of the collective actuator, and determining a collective actuator performance (CAP) threshold that indicates an upcoming servo transparency is likely to occur in the future if a current state of the collective actuator is maintained. The determining of the CAP threshold includes looking up multiple factors of the real-time context data in the look-up table and that cooperatively indicate both a likelihood of the upcoming servo transparency and an estimated duration from a current time point to a time point of the upcoming servo transparency, and setting the CAP threshold relative to the maximum actuation output of the collective actuator. The CAP threshold is compared to a current actuation force output of the collective actuator, and in response to the comparing, the at least one processor operates by automatically performing an action on the rotorcraft to avoid an upcoming servo transparency event that is likely to occur if the current state of the collective actuator is maintained.

By yet another implementation, at least one computer-readable medium includes instructions therein that when executed by a computing device cause the computing device to operate by: detecting real-time context data of a rotorcraft with a collective actuator during a rotorcraft mission, obtaining a maximum actuation output of the collective actuator, and determining a collective actuator performance (CAP) threshold that indicates an upcoming servo transparency is likely to occur in the future if a current state of the collective actuator is maintained. The determining of the CAP threshold includes using multiple factors of the real-time context data that cooperatively indicate both a likelihood of the upcoming servo transparency and an estimated duration from a current time point to a time point of the upcoming servo transparency, and setting the CAP threshold relative to the maximum actuation output of the collective actuator. The CAP threshold is compared to a current actuation force output of the collective actuator, and in response to the comparing, the instructions cause the computing device to operate by automatically performing an action on the rotorcraft to avoid an upcoming servo transparency event that is likely to occur if the current state of the collective actuator is maintained.

### BRIEF DESCRIPTION OF THE DRAWINGS

A more complete understanding of the subject matter may be derived from the following detailed description taken in conjunction with the accompanying drawings, where like reference numerals denote like elements, and:
FIG. 1 is a schematic diagram of an example rotorcraft system according to at least one of the implementations herein;
FIG. 2 is a schematic diagram of an example servo transparency system according to at least one of the implementations herein;
FIG. 3 is a flow chart of an example method of predicting and avoiding a servo transparency according to at least one of the implementations herein; and
FIG. 4 is a schematic diagram of an example avionics display showing a servo transparency warning according to at least one of the implementations herein.

### DETAILED DESCRIPTION

All of the example implementations described herein are provided to enable persons skilled in the art to make or use the disclosed methods, systems, and devices and not to limit the scope of the claims. Furthermore, no intention exists to be bound by any expressed or implied theory presented in the preceding technical field, background, brief summary, or the following detailed description.

The methods and systems disclosed herein alert a pilot of a rotorcraft to an upcoming servo transparency and may provide instructs to the pilot to change the flight controls to avoid the servo transparency. This is accomplished by comparing a current (or real-time) actuation force output of a collective actuator to a dynamic collective actuator performance (CAP) threshold. By one form, the CAP threshold is pre-determined and is based on multiple real-time factors indicating the current context of the rotorcraft and that have been found to indicate both the likelihood of the upcoming servo transparency and an estimated duration from a current time point to a time point of the upcoming servo transparency. By one example form, the threshold is provided as a percentage of a maximum actuation output of the collective actuator. Once a servo transparency (or jack stall) is predicted, an alert may be shown on a display of the cockpit of the rotorcraft or otherwise announced. Instructions then may be provided to direct the pilot to move the flight controls to avoid the servo transparency. Thus, the present method and system of servo transparency detection increases pilot situational awareness.

It will be appreciated that herein the term 'pilot' refers to any aircrew member of a rotorcraft or aircraft, including a co-pilot, and may cooperatively represent the entire aircrew unless the context indicates otherwise. It should also be noted that the phrase servo transparency (or jack stall) is meant in a broad sense to include servo reversibility and refers to sudden increases in forces making the cyclic and/or collective feel heavy or resistant, a feeling of rotor blades resisting the input from the pilot, as well as a feeling that the controls are being pushed back in the opposite direction the pilot is moving or pushing the controls. For fly-by-wire (FBW) systems where the pilot cannot directly feel the effects of servo transparency at the flight controls, the phrase servo transparency also refers to the same aerodynamic forces that would have caused the feel of loss of control or the flight controls pushing back against the pilot as in a mechanical system.

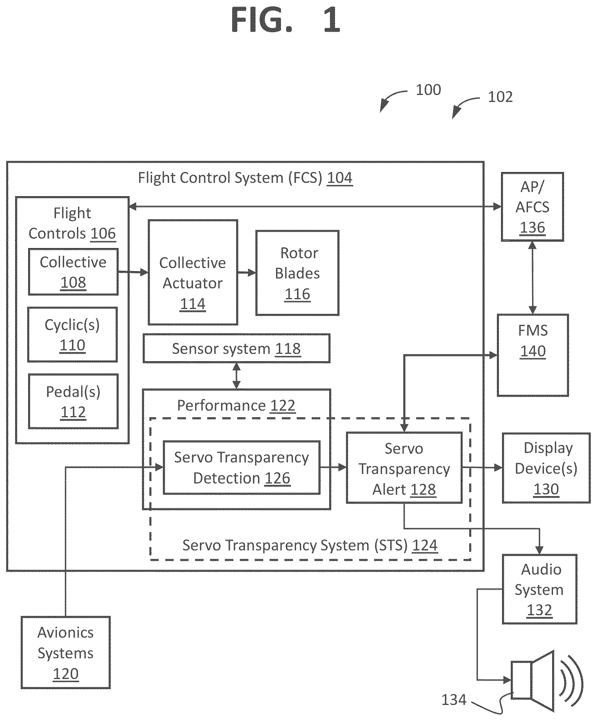

Referring to FIG. 1, a rotorcraft system 100 of a rotorcraft 102 provides automatic alerts and guidance in response to detection of an impending servo transparency according to the implementations herein. The rotorcraft 102 may be any aircraft susceptible to servo transparency, including helicopters. Specifically, the system 100 has avionics systems including a flight control system (FCS) 104, a flight management system (FMS) 140, other avionics systems 120, an optional autopilot/automatic flight control system (AP/AFCS) 136 if such an autonomous system is provided on the rotorcraft 102, one or more display devices 130, and one or more audio systems 132 with one or more speakers 134 or headphone jacks.

The FCS 104 may include flight controls 106 such as a collective (or collective lever) 108, to control vertical lift, a cyclic 110 to control lateral motion, and pedals 112 to control the tail rotor of the rotorcraft 102. The FCS 104 also may be considered to have the flight control actuators including a collective actuator controlled by the collective 108 and to assist with changing the pitch of rotor blades 116 of a main rotor of the rotorcraft 102 (or the rotor system of the rotorcraft 102). The collective actuator 114 may be hydraulic or electrical where the collective actuator 114 uses hydraulic pressure or electrical current to move a swashplate that in turn rotates the rotor blades 116. In either case, the collective lever 108 may be mechanically or electrically coupled to the collective actuator 114, or electronics or circuits of an FBW collective 108 may process the inputs from the pilot (such as from moving of the collective lever 108) and sends corresponding control signals to the collective actuator 114 to in turn rotate the rotor blades 116.

In one form, the FCS 104 may have a performance unit 122 that receives sensor data from sensors (or sensor arrays) 118 monitoring the flight controls 106, the collective actuator 114, and other actuators, devices, and systems on the rotorcraft as well as the environment near the rotorcraft 102 or elsewhere. The sensor system 118 may or may not be considered part of the FCS 104. Relevant here as one example, the sensor system 118 may include an air data computer (ADC) that receives sensor data and provides airspeed, altitude, vertical speed, outside air temperature, and true airspeed, and so forth. The sensor system 118 also may have an inertial reference system (IRS) that has sensors and systems to determine attitude or orientation (roll, pitch, and yaw) of the rotorcraft 102 and motion relative to inertial space (or a reference location or point) often determined by using accelerometers and gyroscopes. The collective actuator force output may be measured using load cells, pressure transducers, or strain gauges integrated into the collective actuator 114. The gross weight also may be provided by the FMS 140. Gravitational acceleration as applied to the rotorcraft may be measured by using accelerometers, strain gauges, force sensors, and servo position feedback systems.

The actual rotor pitch blade angle can be measured in a number of different ways. For example, swashplate position sensors include rotary encoders, potentiometers, and Linear Variable Differential Transformers (LVDTs). Blade pitch linkage sensors use strain gauges and displacement sensors to track deflection. Optical and laser measurement systems employ optical encoders and laser displacement sensors for real-time tracking. Smart rotor blade sensors integrate fiber-optic strain sensors and piezoelectric sensors to monitor blade deflection. Inertial sensors on rotor blades use Inertial Measurement Units (IMUs) to estimate pitch through angular velocity and acceleration data. Many other sensors may be used on the rotorcraft than mentioned here.

The performance unit 122 receives the sensor data and/or rotorcraft parameters from the sensor system 118, and includes a servo transparency detection unit 126 that is part of a servo transparency system (STS) 124. As one example, the servo transparency detection unit 126 also may be part of an enhanced ground proximity warning system (EGPWS) and/or other performance monitoring or alert system or computer.

The rotorcraft system 100 also has the flight management system (FMS) 106 operated by a flight management computer (FMC), and the optional autopilot/automatic flight control system (AP/AFCS) 136 which are communicatively coupled to flight controls 106. The display device(s) 130 may have one or more displays as well as any display rendering systems and circuitry used to display images on the displays. An aural interface, audio system 132, or speaker 134 may be provided as well to provide audio announcements to the pilot.

Once the servo transparency detection unit 126 detects an upcoming servo transparency, the FCS 104 has a servo transparency alert unit 128 to issue an alert to the pilot by using the display device 130 and/or audio system 132. Optionally, the AP/AFCS unit 136 may automatically change the control settings when the pilot is not responding. Other details of the operation of the servo transparency system 124 are provided below.

In will be appreciated that any of the units, systems, and devices of system 100 may be operated by processor circuitry and any combination of hardware, firmware, and software. Thus, system 100 may comprise, or be associated with, any suitable number of individual microprocessors, flight control computers, navigational equipment, memories, power supplies, storage devices, interface cards, input devices, and other components. In this respect, processors of system 100 may include or cooperate with any number of software models, software programs (e.g., rotorcraft display programs), or instructions designed to conduct the various methods, process tasks, calculations, and control/display functions described herein. More details of the processors and memory used to operate the servo transparency system 124 are provided below

While in one example form, all the units, modules, systems, and devices (referred to herein generally as units) of system 100 may be on-board, it will be understood that one or more of these units, or parts of one or more of these units, may be off-board and communicate wirelessly and remotely with the units that are onboard.

Also, while the label of a unit, module, and system on FIG. 1 indicates one or more functions of that unit, module, and system, it will be understood that those functions may be performed, at least partially, by other units or modules mentioned. Thus, for example, the detection of the forthcoming servo transparency may be cooperatively performed by the performance unit 122, the optional AP/AFCS unit 136, FMS 140, other avionics system 120, or any one or combination of these may perform the forthcoming servo transparency detection. The FMS 140 analyzes navigation data, sets flight plans, and provides flight plan data and other navigation-related data for display on the avionic displays of display device 130, or further analysis or use by the other avionic units such as the optional AP/AFCS unit 136 for example.

Regarding a servo transparency prediction in the present example, the servo transparency detection unit 126 may provide the servo transparency alert unit 128 a confirmation that a servo transparency is likely to occur with the current conditions, such as current flight control settings, as well as an estimate as to a duration from the current time point to when the forthcoming servo transparency is likely to occur. The servo transparency alert unit 128 then may set the servo transparency alert to be issued, the action that should be taken to avoid the alert, and the instructions to display to a pilot to perform the action. When the pilot does not respond within a certain duration after the warning is announced, then optionally the AP/AFCS unit 136 may be activated and instructed to perform the avoidance action itself.

The display device 130 is at least one display device and receives data for display, formats the image data, and renders the images on the display device 130. The display device 130 may be any image-generating device with a display screen suitable for use as a display on the rotorcraft or in the cockpit of the rotorcraft. The alert or warning may be displayed or overlayed on many different avionics displays including a primary flight display (PFD), or a multi-function display (MFD). The display device 130 may include various analog (e.g., cathode ray tube) and digital (e.g., liquid crystal, active matrix, plasma, etc.) displays or screens. In certain implementations, a display of a cockpit display device 130 may assume the form of a Head-Down Display (HDD) or a Head-Up Display (HUD) included within a rotorcraft's Electronic Flight Instrument System (EFIS). By one example, the images may be 2D and/or 3D graphical displays or a composite image on display of display device 130 may be in a two-dimensional format (*e.g.,* as a moving map display), a three-dimensional format (*e.g.*, as a perspective display), or in a hybrid format (e.g., in a picture-in-picture or split screen arrangement).

The audio system 132 may have one or more speakers 134 in any suitable audio system to emit an aural warning and instructions when it is determined that a potential impending servo transparency exists as described below.

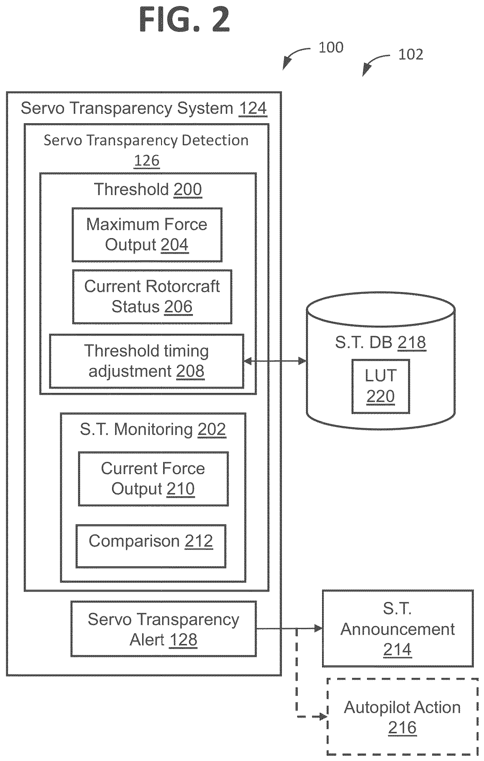

Referring to FIG. 2, the example servo transparency system 124 of the system 100 is shown here with the servo transparency detection unit 126 and the servo transparency alert unit 128. The servo transparency detection unit 126 has a threshold unit 200 and a servo transparency monitoring unit 202. The threshold unit 200 has a maximum force output unit 204, a current rotorcraft status (or real-time context) unit 206, and a threshold timing adjustment unit 208 that may use a servo transparency database (S.T. DB) 218 storing at least a CAP threshold look-up table (LUT) 220 but also may store any servo-transparency-related data. The servo transparency monitoring unit 202 has a current force output unit 210, and a comparison unit 212. When the servo transparency detection unit 126 predicts a servo transparency, the servo transparency alert unit 128 generates a warning and instructions to avoid the servo transparency as well as the timing to display the warning and instructions. The servo transparency alert unit 128 then provides display signals to a servo transparency (S.T.) announcement unit 214 to provide signals to the display device 130. Optionally, when no pilot response is received or detected, an autopilot action unit 216 may generate and autonomously execute flight control adjustments to avoid the servo transparency. The details of the operation of the units of the servo transparency system 124 is provided below with process 300.

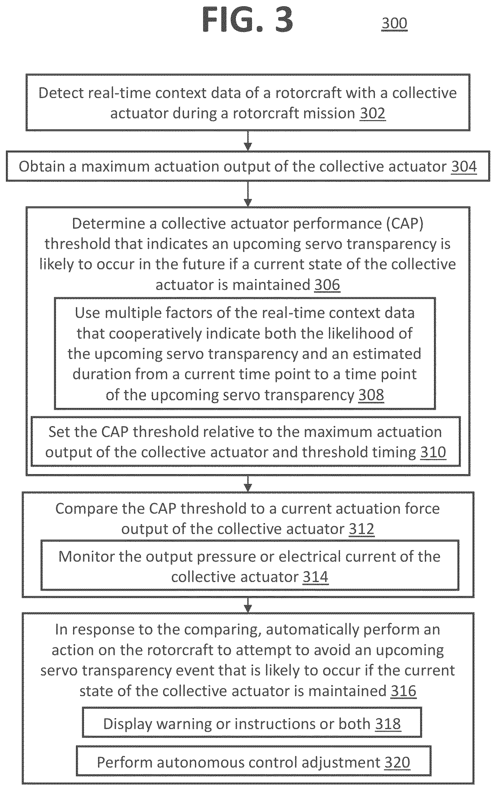

Referring to FIG. 3, an example process 300 for predicting a servo transparency and providing alerts and instructions to avoid the servo is described according to at least one of the implementations herein. The process 300 may include operations 302 to 320 generally numbered evenly. Any of the rotorcrafts, systems, devices, and/or displays of FIGS. 1-2 and 4 may be referred to for process 300, and where relevant.

As a preliminary matter, process 300 may be performed while the rotorcraft is in flight or on a mission, and while not limited to specific flight paths, certain maneuvers are more likely to result in servo transparency (or jack stall) due to disruption of airflow over the helicopter's rotors or when the rotors are unable to provide enough lift, leading to a stall-like condition. This may occur at high speeds when the airflow over the helicopter's rotor blades may change thereby affecting an angle of attack and causing a loss of lift. Also, aggressive maneuvers such as sudden or steep turns, rapid climbs, or high-power maneuvers that change the dynamics of the airflow over the rotor blades is more likely to lead to a jack stall as well.

As another preliminary matter, the servo transparency system 124 may be in an always-on state such that it is activated along with the other systems automatically activated upon powering on of the rotorcraft. By another example form, the servo transparency system is automatically activated depending on the pilot input and maneuvers being performed with the rotorcraft as explained below. Other states of the rotorcraft may activate the servo transparency system as well such as upon an actuator failure in a dual actuator system that is now using a single actuator channel. Otherwise, a manual activator may be provided on the rotorcraft or elsewhere so that a pilot engages the activator such as a graphical user interface (GUI) button on a touch display screen, or other virtual activator, or a physical activator switch in the cockpit.

Once activated, and during a flight, process 300 may include "detect real-time context data of a rotorcraft with a collective actuator during a rotorcraft mission" 302, and performed by the sensor system 118 monitoring the flight controls 106, collective actuator 114, and rotor blades 116. This involves collecting the sensor data, and by one form, by using the IRS and ADC along with other sensors and sensor data analyzers of the sensor system 118 to at least detect those parameters that indicate a likelihood of an upcoming servo transparency and/or the duration from a current point of time to the servo transparency. By the example provided herein, this involves monitoring at least the airspeed, altitude, gross weight, gravitational acceleration applied to the rotorcraft, rotor blade pitch angle, and actuator output (as either pressure or electrical current) to indicate actual or real-time output force from the collective actuator as well as hydraulic system pressure or source pressure. Other parameters may be monitored or obtained as well and as mentioned above, such as pilot input, including the collective pitch input, which indicates the maneuvers the rotorcraft is to perform (or is performing). This operation monitors an 'aggressiveness' of the inputs that are more or less likely to result in a servo transparency. The status of redundant actuators may be monitored as well where a single actuator (or single channel) has less power and stiffness to drive back aerodynamic forces against the rotor blades than multiple channels.

The sensor system 118 (or other systems such as the FMS 140) may compute parameters from the raw sensor data and provide the parameters to the servo transparency system 124. The monitoring may be continuous or at intervals during a flight, and may be different depending on the parameter being monitored, but typically multiple samples per second such as 10Hz to 5kHz depending on the parameter. By one form, the intervals may be different depending on the state of the rotorcraft. Thus, for example, the intervals may be shorter depending on the pilot input and dual actuator status when servo transparency is more likely as mentioned above. The sensor data and/or parameters computed by using the sensor data and relevant to the servo transparency may be collected by the current rotorcraft status unit 206, stored and later used to determine the CAP threshold.

In addition to, or included in, the collection of the sensor data relevant to servo transparency, process 300 may include "obtain a maximum actuation output of the collective actuator" 304, and this may be performed by the maximum force output unit 204. This is a value saved in a memory or servo transparency database 218, such as a typical 3000-5000 psi for a hydraulic collective actuator as one example. For electrical collective actuators, the maximum output measured as electrical current supplied to the collective actuator may be different depending on the size of the helicopter such as 5-30 A for small rotorcraft, 30-100 A for medium rotorcraft, and 100-300 A for large rotorcraft. Performance tests, during standard operation for example, may be used to adjust the maximum actuation output of the collective actuator to provide a more updated (or current) and rotorcraft-specific maximum output that may be different for type of rotorcraft and the specific individual rotorcraft. Other historical or performance data may be saved in S.T. database 218 as well such as data relating to the standard performance of the collective actuator and to be used for calculating the maximum output and/or CAP threshold as needed.

Process 300 may include "determine a collective actuator performance (CAP) threshold that indicates an upcoming servo transparency is likely to occur in the future if a current state of the collective actuator is maintained" 306, and as determined by threshold unit 200. This refers to the generation of a dynamic threshold of the collective actuator output to be used to compare to the actual or real-time output of the collective actuator. This operation of setting the CAP threshold based on the real-time state of the rotorcraft may be considered a preprocessing operation. The CAP threshold may indicate when the actual output pressure of the collective actuator will exceed the maximum output (or output force) of the collective actuator, typically in a short period of time measured in seconds (such as 10-15 seconds as a random example) considering pilot reaction time and assuming the pilot will maintain the current status (or flight control settings) of the rotorcraft.

By one form, the CAP threshold is predetermined and may be determined by using an N-dimensional look-up table or other rule-based equations factoring the parameters mentioned above and determined by experimentation. Thus, process 300 may include "use multiple factors of the real-time context data that cooperatively indicate both the likelihood of the upcoming servo transparency and an estimated duration from a current time point to a time point of the upcoming servo transparency" 308. Thus, the threshold is generated by factoring real-time context of the rotorcraft collected by the current rotorcraft status unit 206 to factor an estimated duration until the predicted servo transparency will occur. This may be performed by the threshold timing adjustment unit 208.

Operation 306 also may include "set the CAP threshold relative to the maximum actuation output of the collective actuator and threshold timing". As mentioned above, it was found that the servo transparency condition is related to certain parameters of the current or real-time context (or status) of the rotorcraft. Several methods can be used to find the applicable CAP threshold, such as by using a real-time calculation based on the input data and standard performance of the collective actuator to find a percentage of the maximum actuation output of the collective actuator (or just output pressure for a hydraulic collective actuator) can provide before entering into a servo transparency condition. For example, a general equation is as follows: $P = F \left(V, Alt, W, G, θ\right)$ (1) where P is a percentage of maximum output (or percentage of risk of stall) that is determined by factoring *F*( ) a combination of airspeed (V), altitude (*alt*), gross weight (W), gravitational acceleration (or G load or just G) applied to the rotorcraft, and rotor blade pitch angle (*θ*).

With this arrangement, the CAP threshold P factors the duration until a servo transparency is to occur by setting a lower percentage P. For example, if a servo transparency is likely to occur more quickly, then the CAP threshold P may be set at 80% rather than 90% since the actual collective actuator output rising toward 100% and of a servo transparency condition will reach 80% before the 90%. In this case, then a servo transparency warning and instructions to avoid the servo transparency will be issued faster than a situation with the CAP threshold P at 90%.

In addition, it was found that the more extreme the value of the variable towards one of the ends of an available range of values for that variable, the risk of servo transparency increases, and the LUT 220 will set the CAP threshold lower. For example, with all the other factors being identical, say the CAP threshold is 90% of maximum output in a high-speed condition, while the CAP threshold may be as high as 95% in a low-speed condition since the force on the rotor accumulates faster when maneuvering in high speed.

By one example approach, a servo transparency CAP threshold look-up table (LUT) 220 is used. The LUT 220 may be constructed by mapping known input combinations of the five parameters or dimensions (or variables) (*V, Alt, W, G, θ*) to corresponding output values P as the CAP threshold. By one form, one variable changes per line of the table and each variable is presented for a range of values possible for each variable. Also, percentage P may be derived either through direct indexing (if all values are discretized) or interpolation, nearest neighbor, defaults, bucket matching, fuzzy matching, and so forth if intermediate values are desired.

To derive the LUT 220, experimental flight testing, simulator-based modeling, and computational fluid dynamics (CFD) simulations may be used. Flight tests involve progressively increasing control loads at various conditions while measuring collective and other servo responses, control forces, and pilot workload. High-speed cameras, strain gauges on control linkages, hydraulic pressure sensors, and force-feedback cyclic measurements may be used to capture data. Wind tunnel testing with instrumented rotor models can simulate extreme aerodynamic loads, while pilot-in-the-loop simulators help refine control strategies. Additionally, dynamic system modeling with finite element analysis (FEA) of servo loads under varying conditions may assist in filling in data gaps. Timing is also factored by recording time to transparency durations during the tests and mapping the duration as well as a lead time for warning the pilot and pilot reactions to set the controls to avoid the servo transparency. The testing may be repeated for different types and specific vehicles or rotorcraft. The LUT 220 then may be stored in the S.T. database 218 for future use.

Process 300 may include "compare the CAP threshold to a current actuation force output of the collective actuator" 312, and this operation may include "monitor the output pressure or current of the collective actuator" 314 to generate the current actuation force output of the collective actuator and that is performed by the current force output unit 210. Specifically, the output force of the collective actuator can be determined by measuring different parameters based on the type of actuator. For hydraulic actuators, a force-pressure-area relationship measure may be used as one example to obtain the hydraulic pressure inside the actuator's cylinder. Other algorithms may be used instead. Since hydraulic actuators generate force based on pressure and piston area, the hydraulic force output can be calculated using: ${F}_{H} = {P}_{H} \times A$ (2) where P_{H} is the measured hydraulic pressure and A is the piston area.

For electrical actuators, a motor torque equation may be used and that is a measure of the electrical current supplied to the actuator motor. Other algorithms may be used instead. Here however, in an electromechanical system, the force output is proportional to the motor's torque, which depends on the current flowing through the motor windings. The relationship may follow: $τ = {k}_{t} \times I$ (3) where τ is torque, kₜ is the motor torque constant, and I is the measured current. In both cases, these measurements help determine how much force the actuator is applying to change the pitch of the rotor blades.

The actual actuator output force (F_{H} or τ ) may be continuously monitored or at intervals as mentioned above with the other parameters. Then, either the actual output force is converted into a percentage of the maximum output force of the collective actuator, or the CAP threshold P is converted into a corresponding force value. Once both values have the same parameter type, the actual and threshold output values are then continuously compared, or compared at intervals. Thus, herein, comparing forces, outputs (or force output), and/or percentages of maximum output generally may be referred to as comparing the threshold to a force output.

Process 300 may include "in response to the comparing, automatically perform an action on the rotorcraft to attempt to avoid an upcoming servo transparency event that is likely to occur if the current state of the collective actuator is maintained" 316, and performed by the comparison unit 212. By one form, no servo transparency reaction is performed unless the actual output force (or percentage of maximum force) exceeds the threshold force (or threshold percentage of maximum force) and exceeded for some predetermined or dynamic minimum duration. By other forms, a reaction may be performed when the threshold is not satisfied a single time. In either case, when the actual output force exceeds the threshold force for a set duration, the rotorcraft may experience servo transparency in a relatively short time. In such a condition, the servo transparency alert unit 128 receives signals from the comparison unit 212 and at least generates an alert, but also may determine actions that can be performed to avoid the servo transparency and generate instructions according to the actions. The warning and instruction data, if present, are then provided to the S.T. announcement unit 214.

By one form, the warning of the upcoming servo transparency is only in audio and announced by using the audio system 132 and speakers 134. The announcement may be "Jack Stall! Move collective down!," or other appropriate language. Alternatively, the warning may not even need to mention "jack stall" or just mentions "warning", and simply provides the instructions. The pilot will know it is a servo transparency warning (or the "jack stall" is simultaneously provided visually on a display instead). This may repeat until an action is taken by the pilot.

Otherwise, the process 300 then may include "display warning or instructions or both" 318. Here, the S.T. announcement unit 214 converts the signals from the servo transparency alert unit 128 and generates a visual warning to be displayed on a human-machine interface (HMI) on the display device 130 and that may be a screen or display in a cockpit of the rotorcraft 102. This can provide significantly increased situational awareness for the aircrew of the rotorcraft, and provide a forewarning of an upcoming servo transparency in time for the aircrew to react and avoid the servo transparency.

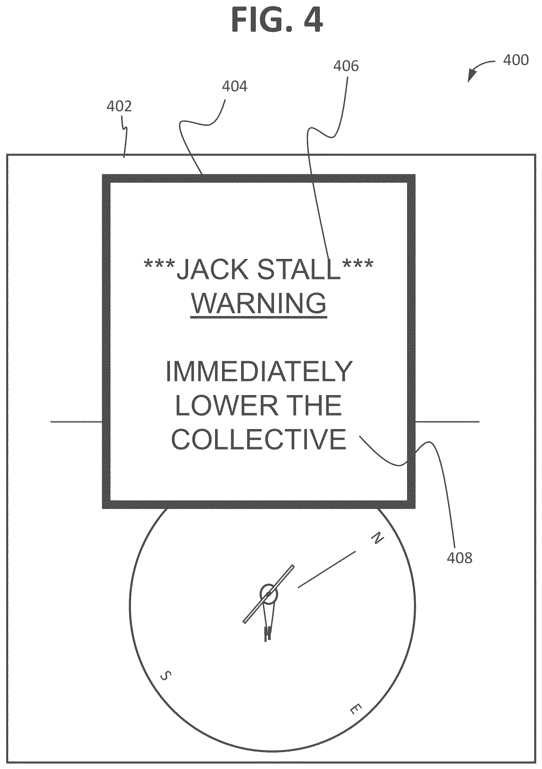

Referring to FIG. 4 now as another example, a display device 400 is the same as display device 130 and may have a screen showing an avionics page 402 such as a PFD, MFD, or any other avionics display shown on a rotorcraft, and in this example, in the cockpit of the rotorcraft. By one form, the warning is displayed if it is detected that the pilot has not reacted to the audio warning after a certain duration the audio warning was announced. In these examples, at least one warning window 404 pops up and is shown instead of, or in addition to, the audio warning. In this case, a warning 406 has warning language (here being "JACK STALL" with or without also stating "WARNING") and directions 408 (here being "IMMEDIATELY LOWER THE COLLECTIVE") to be performed to avoid the servo transparency. The window 404 may be solid or may be transparent so that avionics images may show through the window 404. By other forms, the window 404 may be smaller or placed in certain locations on the avionics page 402 to reduce the amount of the avionics page 402 that is covered by the window 404. By one form, the window 404 may be displayed on a different display device or have its own screen (or page) so as to not cover any other avionics page.

By alternative forms, symbols are shown instead of, or in addition to, words, and by another form, a window border and/or background, warning, or directions may be flashing or have other visual features such as colors, patterns, fonts, shapes, highlighting, and so forth, to attract the attention of the aircrew.

Optionally, process 300 may include "perform autonomous control adjustment" 320 and to avoid the servo transparency when the pilot is not responding to the audio and/or visual warning by a certain predetermined or dynamic duration, such as 5-10 seconds as one random example. This may be performed by the optional autopilot action unit 216 and the AP/AFCS unit 136. Thus, when it is determined that the servo transparency is impending and the pilot is not reacting to the warning, the servo transparency system 124 then may have the servo transparency alert unit 128 provide signals according to the instructions, if not provided already, and to the autopilot action unit 216, which then formats the instructions (or commands or directions) and provides the commands to the AP/AFCS unit 136 to operate the flight controls to avoid the servo transparency according to the instructions.

The AP/AFCS unit 136 then executes the commands, and by one example, may automatically lower or raise the collective lever, or provide equivalent inputs as with an FBW system, to change the collective servo load. It will be understood that the cyclic or other actuators or controls may be adjusted as well for these reasons.

With this example option, and when the output of the collective actuator output force is approaching the output force maximum, the servo transparency alert unit 128 may first alert the pilot with the warning (whether audio or visual or both), and then a second CAP or other threshold may be generated and used to provide the instructions to avoid the servo transparency. If no response is provided by the aircrew after a certain duration as mentioned, then an autonomous response may be performed to immediately reduce the aggressiveness of a current maneuver (or other servo transparency causing action) to lower a load being applied to the rotor as one example.

This arrangement of the disclosed system and method enhances the pilot awareness when the current collective actuator operation is near the operation limits of the collective actuator and proactively avoids the servo transparency conditions. This is true when FBW systems are being used where the pilot cannot "feel" the pushback on the flight controls. Stated another way, the result is a servo transparency warning and early detection monitoring system that identifies the conditions that cause servo transparency and generates cues provided to the pilot for caution and/or warning of an early onset of servo transparency. Guidance is then provided to avoid the servo transparency ideally before it even begins.

It will be appreciated that the various illustrative logical blocks, modules, units, systems, circuits, and algorithms described in connection with the implementations disclosed herein may be implemented as hardware, firmware, software, or any combination of these. Some of the implementations are described above in terms of functional and/or logical block components (or modules or units) and various processing operations. However, it should be appreciated that such block components (or modules or units) may be realized by any number of hardware, software, and/or firmware components configured to perform the specified functions. To clearly illustrate this interchangeability of hardware and software, various illustrative components, blocks, units, modules, circuits, and operations have been described above generally in terms of their functionality. Whether such functionality is implemented as hardware, firmware, software, or a combination of these depends upon the application and development constraints imposed on the overall system. Skilled artisans may implement the described functionality in varying ways for each application, but such implementation decisions should not be interpreted as causing a departure from the scope of the present implementations. For example, an implementation of a system or a component may employ various integrated circuit components, e.g., memory elements, digital signal processing elements, logic elements, look-up tables, or the like, which may conduct a variety of functions under the control of one or more microprocessors or other control devices. In addition, those skilled in the art will appreciate that implementations described herein are merely examples.

The various illustrative logical blocks, modules, units, and circuits described in connection with the implementations disclosed herein, such as the units and systems of system 100 described above (FIG. 1), may be implemented by or operated by processor circuitry forming at least one processor such as a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with one or more DSP cores, a system on a chip (SoC), or any other such configuration.

The operations of a method or algorithm described in connection with the implementations disclosed herein may be embodied directly in hardware, firmware, in a software module executed by a processor, or in any combination of these. A software module may reside in RAM memory, flash memory, ROM memory, EPROM memory, EEPROM memory, registers, hard disk, a removable disk, a CD-ROM, or any other form of storage medium known in the art. An example storage medium is coupled to the processor such that the processor can read information from, and write information to, the storage medium. In the alternative, the storage medium may be integral to the processor. The processor and the storage medium may reside in an ASIC.

Techniques and technologies may be described herein in terms of functional and/or logical units' components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can conduct the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an implementation of a system or a component may employ various integrated circuit components, e.g., memory elements, digital signal processing elements, logic elements, look-up tables, or the like, which may conduct a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium," "processor-readable medium", or "machine-readable medium" may include any medium that can store or transfer information. Examples of the computer-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

Some of the functional units, also referred to as modules, described in this specification have an implementation independence. For example, functionality referred to herein as a module or unit may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process operations must be performed in a temporal or logical order according to such sequence unless it is specifically defined by the language of the claim. The process operations may be interchanged in any order without departing from the scope of the disclosure as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

As used herein, the term "substantially" denotes within 5% to account for manufacturing tolerances. Also, as used herein, the term "about" denotes within 5% to account for manufacturing tolerances.

While at least one example implementation has been presented in the foregoing detailed description of the implementations, it should be appreciated that a vast number of variations exist. It should also be appreciated that the example implementation or example implementations are only examples, and are not intended to limit the scope, applicability, or configuration of the disclosures in any way. Rather, the foregoing detailed description will provide those skilled in the art with a convenient road map for implementing an example implementation. It being understood that various changes may be made in the function and arrangement of elements described in an example without departing from the scope of the implementations as set forth in the appended claims.

## Claims

1. A method, comprising:
detecting, by at least one processor, real-time context data of a rotorcraft with a collective actuator during a rotorcraft mission;
obtaining a maximum actuation output of the collective actuator;
determining, by at least one processor, a collective actuator performance (CAP) threshold that indicates an upcoming servo transparency is likely to occur in the future if a current state of the collective actuator is maintained, wherein the determining of the CAP threshold comprises:
using multiple factors of the real-time context data that cooperatively indicate both a likelihood of the upcoming servo transparency and an estimated duration from a current time point to a time point of the upcoming servo transparency, and
setting the CAP threshold relative to the maximum actuation output of the collective actuator;
comparing, by at least one processor, the CAP threshold to a current actuation force output of the collective actuator; and
in response to the comparing, automatically performing, by at least one processor, an action on the rotorcraft to avoid an upcoming servo transparency event that is likely to occur if the current state of the collective actuator is maintained.

2. The method of claim 1, wherein the collective actuator is hydraulic, and both the CAP threshold and the current actuation force output of the collective actuator are related to hydraulic pressure values.

3. The method of claim 1, wherein the collective actuator is electrical, and both the CAP threshold and the current actuation force output of the collective actuator are related to electrical current values.

4. The method of any one of claims 1 to 3, comprising looking up the multiple factors on a predetermined look-up table to determine the CAP threshold.

5. The method of any one of claims 1 to 3, wherein one of the multiple factors is related to a current available maximum pressure of the collective actuator.

6. The method of any one of claims 1 to 3, wherein one of the multiple factors is at least one of: current airspeed of the rotorcraft, a current altitude of the rotorcraft, a current gross weight of the rotorcraft, a current gravitational acceleration load applied on the rotorcraft, or a current pitch angle of a main rotor blade of the rotorcraft.

7. The method of claim 1, comprising determining whether the current actuation force output exceeds the CAP threshold for a minimum duration to trigger the action.

8. The method of claim 1, comprising monitoring the real-time context data continuously or at intervals so that the CAP threshold changes over time during a mission.

9. A system, comprising:
memory storing a collective actuator performance (CAP) threshold look-up table; and
processor circuitry forming at least one processor communicatively coupled to the memory and being arranged to operate by:
detecting real-time context data of a rotorcraft with a collective actuator during a rotorcraft mission;
obtaining a maximum actuation output of the collective actuator;
determining a collective actuator performance (CAP) threshold that indicates an upcoming servo transparency is likely to occur in the future if a current state of the collective actuator is maintained, wherein the determining of the CAP threshold comprises:
looking up multiple factors of the real-time context data in the look-up table and that cooperatively indicate both a likelihood of the upcoming servo transparency and an estimated duration from a current time point to a time point of the upcoming servo transparency, and
setting the CAP threshold relative to the maximum actuation output of the collective actuator;
comparing the CAP threshold to a current actuation force output of the collective actuator; and
in response to the comparing, automatically performing an action on the rotorcraft to avoid an upcoming servo transparency event that is likely to occur if the current state of the collective actuator is maintained.

10. The system of claim 9, wherein the collective actuator operates by using a fly-by-wire system on the rotorcraft.

11. The system of claim 9, wherein when the individual multiple factors has a value closer to a range limit of a range of available values of individual ones of the multiple factors, then the lower the CAP threshold is set and a servo transparency is more likely to occur.

12. The system of claim 9, wherein the monitoring is activated or occurs more frequently depending on at least one control input manual setting or collective actuator manual setting set by a pilot on the rotorcraft.

13. The system of claim 9, wherein the comparing of the CAP threshold to the current actuation force output is activated or occurs more frequently depending on a status of redundant actuator systems.

14. The system of claim 9, wherein the multiple factors include factors related to a current available maximum pressure of the collective actuator, a current airspeed of the rotorcraft, a current altitude of the rotorcraft, a current gross weight of the rotorcraft, a current aerodynamic load applied on the rotorcraft, and a current pitch angle of the main rotors of the rotorcraft.

15. At least one computer-readable medium comprising instructions therein that when executed by a computing device cause the computing device to operate by:
detecting real-time context data of a rotorcraft with a collective actuator during a rotorcraft mission;
obtaining a maximum actuation output of the collective actuator;
determining a collective actuator performance (CAP) threshold that indicates an upcoming servo transparency is likely to occur in the future if a current state of the collective actuator is maintained, wherein the determining of the CAP threshold comprises:
using multiple factors of the real-time context data that cooperatively indicate both a likelihood of the upcoming servo transparency and an estimated duration from a current time point to a time point of the upcoming servo transparency, and
setting the CAP threshold relative to the maximum actuation output of the collective actuator;
comparing the CAP threshold to a current actuation force output of the collective actuator; and
in response to the comparing, automatically performing an action on the rotorcraft to avoid an upcoming servo transparency event that is likely to occur if the current state of the collective actuator is maintained.
